# EUROPÄISCHE PATENTSCHRIFT

(11) **EP 1 148 445 B1**
(45) Veröffentlichungstag und Bekanntmachung des Hinweises auf die Patenterteilung: **17.03.2010**
(21) Anmeldenummer: 01250132.6
(22) Anmeldetag: 12.04.2001
(51) Int. Cl.: G07B 17/02

(54) **Anordnung für eine optische Geräteschnittstelle**
Apparatus for an optical device interface
Dispositif pour une interface optique entre appareils

(30) Priorität: 22.04.2000 DE 10021251
(43) Veröffentlichungstag der Anmeldung: 24.10.2001
(73) Patentinhaber: Francotyp-Postalia GmbH, 16547 Birkenwerder (DE)
(72) Erfinder: Hetzer, Ulrich, 12679 Berlin (DE); Schilling, Tilmann, 10249 Berlin (DE)

(56) Entgegenhaltungen:
- EP-A- 0 634 625
- EP-A- 0 875 864
- GB-A- 2 145 239
- US-A- 4 310 754

## Beschreibung

Die Erfindung betrifft eine Anordnung für eine optische Geräteschnittstelle gemäss des Oberbegriffs des Anspruchs 1. Die Erfindung kommt in Frankiermaschinen bei deren optischen Kopplung mit optionalen Peripheriegeräten bzw. zwischen Stationen einer Postverarbeitungsmaschine zum Einsatz.

Moderne Frankiermaschinen sind aufgrund ihrer reichhaltigen Elektronik oft störanfällig gegen elektrostatische Aufladung und magnetische Störfelder. Bereits in der EP 875 864 A2 wurde deshalb eine Anordnung zur Kommunikation zwischen Stationen einer Postbearbeitungsmaschine vorgeschlagen. Dabei werden zwar Optokoppler eingesetzt, jedoch hier nur zur Entkopplung zwischen Meter und Base der Frankiermaschine JetMail^{®}. Die Kopplung zwischen den Stationen der Postverarbeitungsmaschine erfolgt allerdings wieder elektrisch über Steckverbinder.

Es ist bereits bekannt, Lichtleitermittel flexibel auszuführen, um Geräte kommunikativ zu verbinden (US 4.310.754).

Aus GB 2.145.239 A ist eine Vorrichtung zur Übertragung einer Information von einem ersten zu einem zweiten Gerät über ein einziges Lichtleiterstück und aus EP 634 625 A2 ist eine Leiterplatte mit Sende- und Empfangssowie Lichtleitermitteln bekannt. Bei beiden Lösungen wird eine Trennung des Lichtleiterstücks in Teile, d.h. ein räumlicher Abstand zwischen starren Lichtleiterstücken, die sich in unterschiedlichen Geräten befinden, vermieden.

In der DE 196 05 015 C1 (US 5.949.444) ist bereits die Druckvorrichtung der JetMail^{®} näher erläutert worden, die bei einem nichtwaagerechten annähernd vertikalen Brieftransport einen Frankierdruck mittels einem hinter einer Führungsplatte in einer Ausnehmung stationär angeordneten Tintenstrahldruckkopf durchführt. Ein Auslöse-Sensor für den Druckprozess ist kurz vor der Tintenstrahldruckkopf-Ausnehmung angeordnet. Er dient zur Briefanfangserkennung und wirkt mit einem Inkrementalgeber für eine Wegsteuerung zusammen. Bei der JetMail^{®} wird der Druckprozess durch eine Durchlichtschranke der Frankiermaschine (EP 901 108 A2) ausgelöst. Damit wird die Vorderkante sogar besonders dicker Poststücke eindeutig erkannt. Ausserdem kommen bei der JetMail^{®} weitere optische Sensoren zur Poststück-Stauerkennung und Wegsteuerung zum Einsatz.

Die vorgenannten Sensoren und mindestens ein Sensor eines optionalen Gerätes sind ebenfalls an die Steuerung der Frankiermaschine angeschlossen. Das Gerät ist zum Beispiel ein Ablagekasten ohne eigene Spannungsversorgung. Ein Erfüllen von Sensorfunktionen von einem solchen optionalen Gerät, erfordert dann eine Spannungsübertragung eine Übertragung einer elektrischen Spannung zwischen den Geräten, die dafür entsprechend ausgebildet sind. Die Montage aller Sensoren einschliesslich ihrer Fixierung und Ausstattung mit Steckverbindern und mit Kabeln zur Hauptleiterplatte in den Geräten sowie die Schnittstellen und Kabel zur Kommunikation der Stationen untereinander erfordern allerdings hohe Herstellungskosten. Alle bisherige Lösungen, welche elektrische Interfaces mit Steckverbinder und Kabel zwischen den Geräten einerseits und eine Sensorik mit eigener Spannungsversorgung in den optionalen Geräten andererseits einsetzen, müssen aufwendig vor elektro-magnetischen Störfeldern geschützt werden.

Der Erfindung liegt die Aufgabe zugrunde, eine Anordnung für eine optische Geräteschnittstelle zu entwickeln, die eine zuverlässige kostengünstige Datenkommunikation zwischen Frankiermaschine und optionalen Geräten ermöglicht, welche mit und ohne eigene Spannungsquellen ausgestattet sind. Die optische Geräteschnittstelle soll nur geringe Herstellungskosten aufweisen. Beim Erfüllen von Sensorfunktionen im optionalen Gerät ohne eigene Spannungsversorgung soll eine Einsparung der Spannungsversorgungsmittel ermöglicht werden.

Die Aufgabe wird mit den Merkmalen der Anordnung nach dem Anspruch 1 gelöst.

Eine Frankiermaschine oder ein anderes Postverarbeitungsgerät mit Poststücktransport hat ein Gehäuse mit einer Öffnung für die Poststückzuführung mit einer im Inneren angeordneten Hauptleiterplatte für die Steuerung der Frankiermaschine. Der Abstand der Hauptleiterplatte der Frankiermaschine zu einer Lokalität in einem optionalen Gerät wird durch den erfindungsgemässen Einsatz von starren Lichtleiterstücken überbrückt. Die starren Lichtleiterstücke und die Sende- und Empfangsmittel auf der Hauptleiterplatte dienen zur Signalübermittlung in Verbindung mit der Datenkommunikation und Sensorik in den optionalen Geräten.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: perspektivische Ansicht einer oben offenen Frankiermaschine und einem ersten optionalen Gerät,
- Figur 2,: Schematische Seitenansicht einer Frankiermaschine mit einem ersten optionalen Gerät,
- Figur 3a,: Schnitt durch die Frankiermaschine und das erste optionale Gerät bei schematischer Seitenansicht,
- Figur 3b,: Schnitt durch die Frankiermaschine und ein zweites optionales Gerät bei schematischer Seitenansicht.

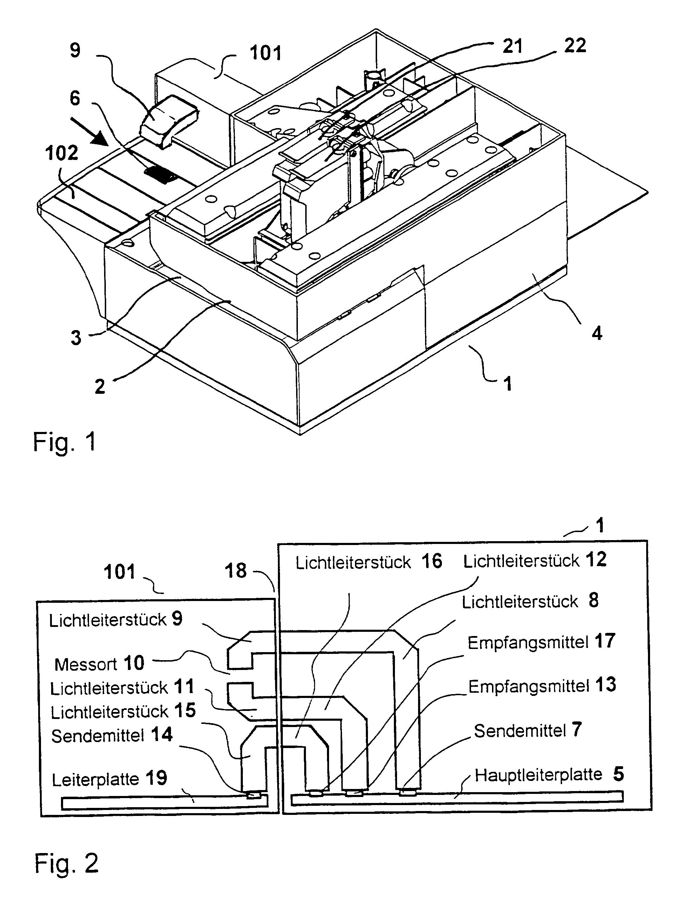

Die Figur 1 zeigt eine perspektivische Ansicht einer oben geöffneten Frankiermaschine 1 und einem ersten optionalen Gerät 101 für die Poststückzuführung. Das optionale Gerät kann als Zuführstation 101 ohne eigene Spannungsversorgung ausgebildet sein. Die Frankiermaschine 1 hat eine schlitzförmige Öffnung 3 in ihrem Gehäuse 4. Die Transportrichtung für ein zugeführtes - nicht gezeigtes - Poststück ist durch einen Pfeil gekennzeichnet und verläuft von links oben nach rechts unten. Eine Auflageplatte 102 der Zuführstation 101 hat eine Öffnung 6. Ein angelegtes Poststück würde die Öffung 6 verdecken, so dass ein an der Zuführstation 101 angeordnetes Lichtleiterstück 9 nicht mehr durch die Öffnung 6 mit einem weiteren - nicht sichtbaren - Lichtleiterstück 11 kommunizieren kann. Das Poststück kommt beim weiteren Transport zum Anliegen an eine Führungsplatte 2 der Frankiermaschine 1. Das oben geöffnete Gehäuse 4 zeigt zwei in Druckposition positionierte Tintenstrahldruckköpfe 21, 22 der Frankiermaschine 1.

Die Figur 2 zeigt eine schematische Seitenansicht einer Frankiermaschine mit einem ersten optionalen Gerät. Die Lokalität in dem optionalen Gerät ist in der ersten Ausführung ein Messort. Zwischen Frankiermaschine und dem Messort kann via Lichtleiterstücke 8, 9, 11, 12 eine zuverlässige und kostengünstige Datenkommunikation ermöglicht werden, ohne dass eine Abschirmung und Spannungsübertragung erforderlich werden. Durch Infrarotlicht werden der räumliche Abstand 18 zwischen den Lichtleiterstücken 9 und 11 des Gerätes 101 und den Lichtleiterstücken 8 und 12 der Frankiermaschine 1 einerseits und der Abstand am Messort 10 zwischen den Lichtleiterstücken 9 und 11 des Gerätes 101 andererseits überbrückt. Die Frankiermaschine 1 hat im Inneren eine Hauptleiterplatte 5 mit Sende- und Empfangsmitteln 7 und 13 sowie mit zugehörigen starren Lichtleiterstücken 8 und 12. Ein Lichtleiterstück 8 hat zum Beispiel eine abgewinkelte Form und soll mit einem Lichtleiterstück 9 zusammentreffen, welches im optionalen Gerät 101 angeordnet ist. Ein Lichtleiterstück 11 ist im optionalen Gerät 101 angeordnet und soll mit einem Lichtleiterstück 12 zusammentreffen, welches in der Frankiermaschine 1 angeordnet ist. Das Lichtleiterstück 11 kommuniziert zum Beispiel durch eine Öffnung 6 der Auflageplatte 102 (wie in der Fig.1 gezeigt) mit dem Lichtleiterstück 11 des optionalen Gerätes 101.

Eine Leuchtemitterdiode LED in der Frankiermaschine dient Sendemittel 7. Bei Dauerstrombelastung der LED müsste der Durchlassstrom auf < 90 mA verringert werden, wodurch sich zwangsläufig die Lichtstärke des emittierten Lichtes verringert. Das könnte die Gefahr von Fremdlichteinfluss auf das Messergebnis erhöhen. Es ist deshalb vorgesehen, dass zur Fremdlichtminimierung die Leuchtemitterdiode LED getaktet wird. Bei einem 10 µs-Impuls ist für die LED vom Typ LD 274 (Siemens) ein Stossstrom von 3 A noch zulässig. Die Taktung verringert den Stromverbrauch und erhöht die Abtastsicherheit gegenüber einer Dauerstrombelastung der LED. Beispielsweise kann in der LED vom Typ LD 274 (Siemens) ein Impuls von 20 ms einen Durchlassstrom von 100 mA hervorrufen, um gebündeltes Infrarotlicht der Wellenlänge von ca. 950 nm mit eine Lichtstärke zu erzeugen, die es gestattet mehrere Zentimeter Abstand am Messort 10 und zwischen den Geräten 1, 101 zu überbrücken.

Es ist alternativ zur ersten Ausführung bzw. weiterhin vorgesehen, dass eine Datenkommunikation zwischen der Frankiermaschine 1 und einem optionalen Gerät 101 mit eigener Spannungsquelle erfolgt. Zu diesem Zweck ist im Inneren des optionalen Gerätes eine Leiterplatte 19 mit einem Sendemittel 14 und ein starres Lichtleiterstück 15 angeordnet. Ein anderes starres Lichtleiterstück 16 hat eine angepasste Form und ist in der Frankiermaschine 1 angeordnet. Das Lichtleiterstück 16 führt das Infrarotlicht an ein Empfangsmittel 17 auf der Hauptleiterplatte 5 der Frankiermaschine 1, wenn der Abstand 18 zwischen beiden Lichtleiterstücken 15, 16 überwunden wurde. Die Lokalität in dem optionalen Gerät ist in der zweiten Ausführung ein Sendeort.

Es ist vorgesehen, dass die starren Lichtleiterstücke 8, 9, 11, 12, 15, 16 zur Fixierung und Bündelung des Infrarotlichtstrahles als transparente Kunststofflichtleiter ausgebildet sind. Der Kunststofflichtleiter besteht vorzugsweise aus Polycarbonat und ist unter dem Namen "Acryl" bekannt.

Es ist möglich, dass - wie in Fig. 2 gezeigt - in einem einzigen optionalen Gerät beide Ausführungen der Erfindung verwirklicht sind. Die Ausführungen der Erfindung können jedoch auch in separaten optionalen Geräten verwirklicht sein.

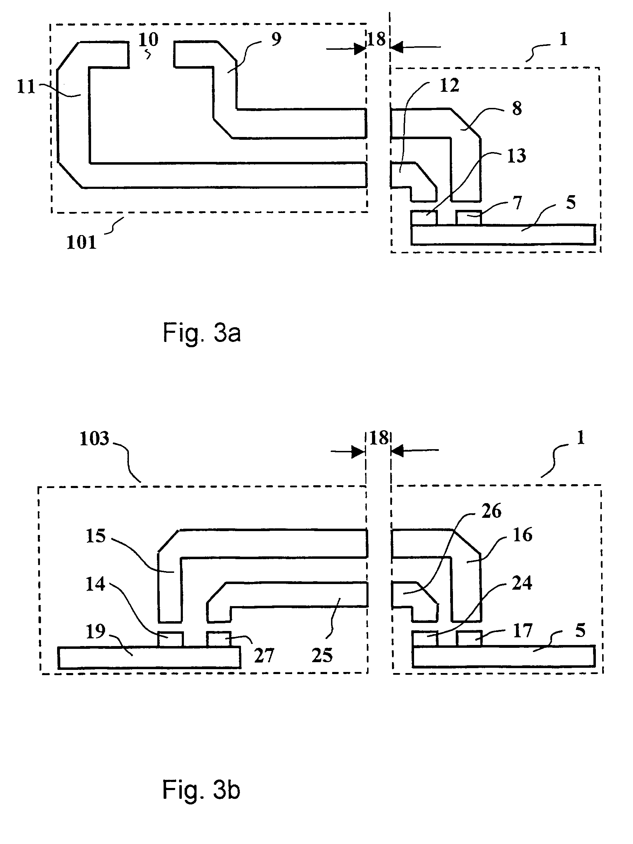

Die Figur 3a zeigt einen Schnitt durch die Frankiermaschine und das erste optionale Gerät bei schematischer Seitenansicht, wobei der Schnitt durch den Messort verläuft. Das erste optionale Gerät 101 mit dem Messort 10 hat keine eigene Stromversorgung und folgende Merkmale:
- Anordnung von Sende- und Empfangsmitteln 7, 13 auf der Hauptleiterplatte 5 der Frankiermaschine 1.
- Anordnung mindestens eines ersten transparenten Kunststofflichtleiterstückes 8, 12 zur Fixierung und Bündelung eines Lichtstrahles in der Frankiermaschine zur Kommunikation mit dem optionalem Gerät 101.
- Anordnung eines zweiten transparenten Kunststofflichtleiterstückes 9 im optionalem Gerät 101 so, dass der von der Frankiermaschine 1 gesendete Lichtstrahl aufgenommen und gebündelt wird.
- Anordnung eines dritten transparenten Kunststofflichtleiterstückes 11 im optionalen Gerät 101 zur Detektierung von Objekten im Lichtstrahl und Anordnung des transparenten Kunststofflichtleiterstückes 12 in der Frankiermaschine 1 zur Rückleitung des Lichtstrahles.

Als optionales Gerät 101 kann beispielsweise eine an der Frankiermaschine 1 poststromabwärts liegende Ablagevorrichtung vorgesehen sein, welche einen Sensor aufweist, der einen Stau an Poststücken oder die erreichte Ablagehöhe detektieren kann. Die Erfindung ermöglicht ein Erfüllen von Sensorfunktionen im optionalen Gerät 101 ohne eigene Spannungsversorgung und eine Einsparung der Spannungsversorgung.

Die Figur 3b zeigt einen Schnitt durch die Frankiermaschine und ein zweites optionales Gerät bei Seitenansicht. Das zweite optionale Gerät 103 hat hier aber eine eigene Stromversorgung und folgende Merkmale:
- Anordnung von einem Empfangsmittel 17 auf der Hauptleiterplatte 5 der Frankiermaschine 1 und von einem Sendemittel 14 auf der Leiterplatte 19 des zweiten optionalen Gerätes 103. Optionale Anordnung von einem Sendemittel 24 auf der Hauptleiterplatte 5 der Frankiermaschine 1 und von einem Empfangsmittel 27 auf der Leiterplatte 19 des zweiten optionalen Gerätes 103.
- Anordnung mindestens eines ersten transparenten Kunststofflichtleiterstückes 16 zur Fixierung und Bündelung eines Lichtstrahles in der Frankiermaschine 1 zur Kommunikation mit dem optionalen Gerät 103.
- Anordnung eines zweiten transparenten Kunststofflichtleiterstückes 15 im optionalem Gerät so, dass der Lichtstrahl aufgenommen und gebündelt wird.
- Anordnung von Kunststofflichtleiterstücken 15, 25 in den zweiten optionalen Geräten 103 zur Datenabfrage.

Als optionales Gerät 103 kann beispielsweise eine an der Frankiermaschine 1 poststromaufwärts liegende Zuführvorrichtung vorgesehen sein, welche mindestens einen Sensor und eine Motor bzw. anderen Aktuator aufweist. Eine getakte Abfrage von mehreren Sensoren (Lichtschranken, Motor-Encoder...) kann über unterschiedliche Mittel und verschiedene Kunststofflichtleiterstücke oder über eine gemeinsames Mittel und denselben Kunststofflichtleiter ( 2 Stücke) erfolgen.

Die Sende- und Empfangsmittel 7 und 13 bzw. 14 und 17 oder 24 und 27 können Laserdiode, LED und Fotodiode, Fototransistor oder eine andere geeignete Lichtquelle bzw. Opto/Elektro-Wandler sein. Vorzugsweise wird eine Sendediode mit sehr engem Abstrahlwinkel, hoher Impulsbelastbarkeit und Zuverlässigkeit eingesetzt. Geeignet ist beispielsweise eine GaAs-Infrarot-Leucht-Emitter-Diode der Firma Siemens vom Typ LD 274. Als Fototransistor kann beispielsweise ein NPN-Silizium-Fototransistor der Firma Siemens vom Typ SFH 300 eingesetzt werden.

## Patentansprüche

1. Anordnung mit einer optischen Geräteschnittstelle, wobei
- die Anordnung ein Gerät (101, 103) und ein Postverarbeitungsgerät (1) aufweist,
- in dem Postverarbeitungsgerät (1) von dem Gerät (101, 103) entfernt, eine Hauptleiterplatte (5) angeordnet ist,
- die Hauptleiterplatte (5) Mittel für eine Steuerung und mindestens ein Sende- (7, 24) und/oder ein Empfangsmittel (13, 17) aufweist,
- die Sende- und/oder Empfangsmittel (7, 13, 17, 24) auf der Hauptleiterplatte (5) angeordnet sind,
- starre Lichtleiterstücke (8, 12, 16, 26) des Postverarbeitungsgeräts (1) zwischen dem Gerät (101, 103) und der Hauptleiterplatte (5) mit den Sende- und Empfangsmitteln (7, 13, 17, 24) angeordnet sind,
- in dem Gerät starre Lichtleiterstücke (9, 11, 15, 25) angeordnet sind,
- die starren Lichtleiterstücke und die Sende- und/oder Empfangsmittel zur Kommunikation mit dem Gerät ausgebildet sind, wobei LichtSignale über einen räumlichen Abstand (18), zwischen den Lichtleiterstücken (9, 11, 15, 25) des Geräts (101 bzw. 103) und den Lichtleiterstücken (8, 12, 16, 26) des Postverarbeitungsgeräts (1) übertragen werden.

2. Anordnung, nach Anspruch 1, **dadurch gekennzeichnet, dass** das Postverarbeitungsgerät (1) eine Frankiermaschine (1) ist, wobei Lichtleiterstücke (9, 11) des Geräts (101, 103) zur Detektierung von Objekten an einem Messort (10) nach dem Durchlichtprinzip ausgebildet sind.

3. Anordnung, nach Anspruch 1, **dadurch gekennzeichnet, dass**
- das Postverarbeitungsgerät eine Frankiermaschine ist,
- auf der Hauptleiterplatte (5) der Frankiermaschine (1) ein Empfangsmittel (17) und
- auf einer Leiterplatte (19) des Gerätes (103) ein Sendemittel (14) angeordnet ist,
- der Sendeort in dem Gerät (103) poststromaufwärts von dem Druckort angeordnet ist, in welchem ein Druckkopf (21, 22) der Frankiermaschine (1) positioniert werden kann.

4. Anordnung, nach den Ansprüchen 1 und 3, **dadurch gekennzeichnet, dass** Lichtleiterstücke (15, 25) in dem Gerät (103) zur Datenabfrage angeordnet sind.

5. Anordnung, nach den Ansprüchen 1 und 3, **dadurch gekennzeichnet, dass** auf der Hauptleiterplatte (5) der Frankiermaschine (1) ein Sendemittel (24) und dass auf der Leiterplatte (19) des zweiten optionalen Gerätes (103) ein Empfangsmittel (27) angeordnet ist.

6. Anordnung, nach Anspruch 1, **dadurch gekennzeichnet, dass** die starren Lichtleiterstücke (8, 9, 11, 12, 15, 16) zur Fixierung und Bündelung des Lichtstrahles als transparente Kunststofflichtleiter ausgebildet sind.

7. Anordnung, nach Anspruch 1, **dadurch gekennzeichnet, dass** zur Fremdlichtminimierung und Erhöhung der Abtastsicherheit eine getaktete Leuchtemitterdiode als Sendemittel (7, 14, 24) eingesetzt wird.

8. Anordnung, nach Anspruch 2, **dadurch gekennzeichnet, dass** der Messort (10) in dem Gerät (103) poststromaufwärts von dem Druckort angeordnet ist, in welchem ein Druckkopf (21, 22) der Frankiermaschine (1) positioniert werden kann.

9. Anordnung, nach Anspruch 2, **dadurch gekennzeichnet, dass** der Messort (10) in dem Gerät (103) poststromabwärts von dem Druckort angeordnet ist, in welchem ein Druckkopf (21, 22) der Frankiermaschine (1) positioniert werden kann.

10. Anordnung, nach den Ansprüchen 2, 3, 4, 5, 8 oder 9, **dadurch gekennzeichnet, dass** am Sendeort bzw. Messort (10) in dem Geräte (101, 103) verschiedene Kunststofflichtleiterstücke eine getaktete Abfrage von mehreren Sensoren erlauben.

## Claims

1. An arrangement with an optical device interface, wherein
- the arrangement comprises an apparatus (101, 103) and a postal-items processing apparatus (1),
- a main printed circuit board (5) is arranged in the postal-items processing apparatus (1) remotely from apparatus (101, 103),
- the main printed circuit board (5) comprises control means and at least one transmitting means (7, 24) and/or a receiving means (13, 17),
- the transmitting and/or receiving means (7, 13, 17, 24) are arranged on the main printed circuit board (5),
- rigid optical waveguide pieces (8, 12, 16, 26) of the postal-items processing apparatus (1) are arranged between the apparatus (101, 103) and the main printed circuit board (5) with the transmitting and receiving means (7, 13, 17, 24),
- rigid optical waveguide pieces (9, 11, 15, 25) are arranged in the apparatus,
- the rigid optical waveguide pieces and the transmitting and/or receiving means are designed for communicating with the apparatus, light signals being transmitted over a spatial distance (18) between the optical waveguide pieces (9, 11, 15, 25) of the apparatus (101, 103) and the waveguide pieces (8, 12, 16, 26) of the postal-items processing apparatus (1).

2. An arrangement according to Claim 1, **characterized in that** the postal-items processing apparatus (1) is a franking machine (1), the optical waveguide pieces (9, 11) of the apparatus (101, 103) being designed for detecting objects at a measuring point (10) according to the transmitted-light principle.

3. An arrangement according to Claim 1, **characterized in that**
- the postal-items processing apparatus is a franking machine,
- a receiving means (17) is arranged on the main printed circuit board (5) of the franking machine (1) and
- a transmitting means (14) is arranged on a printed circuit board (19) of the apparatus (103),
- the point of transmission in the apparatus (103) is arranged in the postal-items flow upstream the point of printing where a print head (21, 22) of the franking machine (1) can be positioned.

4. An arrangement according to Claims 1 and 3, **characterized in that** optical waveguide pieces (15, 25) are arranged in the apparatus (103) for data query.

5. An arrangement according to Claims 1 and 3, **characterized in that** a transmitting means (24) is arranged on the main printed circuit board (5) of the franking machine (1) and a receiving means (27) is arranged on the printed circuit board (19) of the second optional apparatus (103).

6. An arrangement according to Claim 1, **characterized in that** the rigid optical waveguide pieces (8, 9, 11, 12, 15, 16) have the form of transparent polymer optical waveguide units for fixing and bundling the light beam.

7. An arrangement according to Claim 1, **characterized in that** a clocked light emitting diode serves as transmitting means (7, 14, 24) for minimizing ambient light and increasing scanning reliability.

8. An arrangement according to Claim 2, **characterized in that** the measuring point (10) in the apparatus (103) is arranged in the postal-items flow upstream the point of printing where a print head (21, 22) of the franking machine (1) can be positioned.

9. An arrangement according to Claim 2, **characterized in that** the measuring point (10) in the apparatus (103) is arranged in the postal-items flow downstream the point of printing where a print head (21, 22) of the franking machine (1) can be positioned.

10. An arrangement according to Claims 2, 3, 4, 5, 8 or 9, **characterized in that** various polymer optical waveguide pieces allow a clocked query of several sensors at the point of transmission or measuring point (10) in the apparatus (101, 103).

## Revendications

1. Dispositif avec une interface optique entre appareils, dans lequel
- ledit dispositif comporte un appareil (101, 103) et un appareil de traitement de courrier (1),
- l'appareil de traitement de courrier (1) est équipé d'une carte principale de circuit imprimé (5), éloignée de l'appareil (101, 103),
- la carte principale de circuit imprimé (5) comporte un moyen pour une commande et au moins un moyen d'émission (7, 24) et/ou un moyen de réception (13, 17),
- les moyens d'émission et/ou de réception (7, 13, 17, 24) sont disposés sur la carte principale de circuit imprimé (5),
- des conduits de lumière rigides (8, 12, 16, 26) de l'appareil de traitement de courrier (1) sont disposés entre l'appareil (101, 103) et la carte principale de circuit imprimé (5) avec ses moyens d'émission et de réception (7, 13, 17, 24),
- des conduits de lumière rigides (9, 11, 15, 25) sont disposés dans l'appareil,
- les conduits de lumière rigides et les moyens d'émission et/ou de réception sont conçus pour permettre une communication avec l'appareil, pendant laquelle des signaux lumineux sont transmis, à travers un espacement (18), entre les conduits de lumière (9, 11, 15, 25) de l'appareil (101 ou enc. 103) et les conduits de lumière (8, 12, 16, 26) de l'appareil de traitement de courrier (1).

2. Dispositif selon la revendication 1, **caractérisé en ce que** l'appareil de traitement de courrier (1) soit une affranchisseuse (1), dont les conduits de lumière (9, 11) de l'appareil (101, 103) sont conçus pour détecter des objets à un point de mesure (10), selon le principe de la transmission d'un faisceau d'ondes optiques rayonnées.

3. Dispositif selon la revendication 1, **caractérisé en ce,**
- **que** l'appareil de traitement de courrier soit une affranchisseuse,
- **qu'**un moyen de réception (17) soit disposé sur la carte principale de circuit imprimé (5) de l'affranchisseuse (1) et
- **qu'**un moyen d'émission (14) soit disposé sur la carte de circuit imprimé (19) de l'appareil (103),
- **que** le point d'émission dans l'appareil (103) soit disposé en amont du flux postal du lieu d'impression, dans lequel on peut positionner une tête d'impression (21, 22) de l'affranchisseuse.

4. Dispositif selon les revendications 1 et 3, **caractérisé en ce que** des conduits de lumière (15, 25) soient disposés dans l'appareil (103) pour la demande de données.

5. Dispositif selon les revendications 1 et 3, **caractérisé en ce qu'**un moyen d'émission (24) soit disposé sur la carte principale de circuit imprimé (5) de l'affranchisseuse (1) et qu'un moyen de réception (27) soit disposé sur la carte de circuit imprimé (19) du deuxième appareil optionnel (103).

6. Dispositif selon la revendication 1, **caractérisé en ce que** les conduits de lumière rigides (8, 9, 11, 12, 15, 16) soient conçus en tant que conduits de lumière transparents en matière plastique, destinés à la fixation et à la collimation du faisceau lumineux.

7. Dispositif selon la revendication 1, **caractérisé en ce qu'**une diode électroluminescente cadencée soit utilisée en tant que moyen d'émission (7, 14, 24) pour la minimisation de lumière parasite et pour l'augmentation de la sécurité de palpage.

8. Dispositif selon la revendication 2, **caractérisé en ce que** le point de mesure (10) dans l'appareil (103) soit disposé en amont du flux postal du lieu d'impression, dans lequel on peut positionner une tête d'impression (21, 22) de l'affranchisseuse (1).

9. Dispositif selon la revendication 2, **caractérisé en ce que** le point de mesure (10) dans l'appareil (103) soit disposé en aval du flux postal du lieu d'impression, dans lequel on peut positionner une tête d'impression (21, 22) de l'affranchisseuse (1).

10. Dispositif selon les revendications 2, 3, 4, 5, 8 ou 9, **caractérisé en ce que** divers conduits de lumière en matière plastique permettent, au lieu d'émission ou encore au point de mesure (10) dans l'appareil (101, 103), une interrogation cadencée de plusieurs capteurs.
